# DEMANDE DE BREVET EUROPEEN

(11) **EP 2 641 824 A1**
(43) Date de publication de la demande: **25.09.2013**
(21) Numéro de dépôt: 13305310.8
(22) Date de dépôt: 15.03.2013
(51) Int. Cl.: B63B 1/32

(54) **Système de portance pour un bateau et agencement d'un tel système**

(30) Priorité: 19.03.2012 FR 1252432
(71) Demandeur: Arendee, 07700 Bourg Saint Andeol (FR)
(72) Inventeur: Cabiron, Jean-Louis, 07700 BOURG SAINT ANDEOL (FR)
(74) Mandataire: Thinat, Michel

(57) **Abrégé**

L'invention concerne un système de portance pour un bateau et plus particulièrement un agencement d'un tel système sur un bateau. Le système comprend au moins une aile (2) adaptée pour engendrer de la portance aérodynamique destinée à réduire le frottement entre une coque (1) du bateau et l'eau dans laquelle le bateau se déplace. Selon l'invention, le système comprend au moins deux ailes supplémentaires (106) et des moyens de déploiement (108) adaptés pour varier la surface de l'aile (2) par translation rotative des ailes supplémentaires (106).

## Description

L'invention concerne un système de portance pour un bateau et plus particulièrement l'agencement d'un tel système sur un bateau.

Dans le cadre de la présente invention, le terme bateau désigne tout type de véhicule naval ayant un ou plusieurs corps flottants moyennant lequel ou lesquels le bateau se déplace dans l'eau et qui sont résumés ci-après par le terme coque.

Lorsqu'un bateau se déplace dans l'eau, la coque subit un frottement avec l'eau. Ce frottement augmente avec la vitesse du bateau.

Les solutions proposées jusqu'à maintenant pour réduire ce frottement, autres que celles visant à rendre la surface de la coque la plus lisse possible ou de réduire l'adhérence de l'eau à la coque, comprennent des moyens permettant de soulever le bateau de plus en plus au fur et à mesure que la vitesse du bateau augmente. Ces moyens sont constitués principalement par des ailes disposées de part et d'autre de la coque à un niveau déterminé de façon à ce que les ailes ne sortent pas de l'eau lorsque le bateau se déplace à pleine vitesse.

Quelle que soit l'efficacité de tels moyens de portance, en raison des dimensions relativement importantes des ailes ou pour le moins en raison de leur dépassement par rapport à la coque, ces moyens augmentent sensiblement l'encombrement du bateau, ce qui entraîne par exemple une augmentation de la place nécessaire aux places de port, une plus grande largeur de passage pour le bateau et une réduction de sa manoeuvrabilité.

Le document FR-A-1 294 727 propose d'équiper les bateaux d'ailes télescopiques, ce qui permet de varier la surface de portance de ces ailes. Toutefois, la conception télescopique implique que les éléments associés de cette manière les uns aux autres deviennent de plus en plus petits, et présentent ainsi une surface de portance de moins en moins importante, de la coque vers l'extrémité extérieure de chacune de ces ailes.

Le but de la présente invention est de remédier aux divers inconvénients décrits ci avant.

Le but de l'invention est atteint avec un agencement d'un système de portance sur un bateau, le système comprenant au moins une aile adaptée pour engendrer de la portance destinée à réduire le frottement entre une coque du bateau et l'eau dans laquelle le bateau se déplace. L'aile est disposée par rapport à la coque de façon à engendrer, lorsque le bateau se déplace, de la portance aérodynamique.

Selon l'invention, le système de portance comprend des ailes supplémentaires et des moyens de déploiement adaptés pour varier la surface de l'aile par translation rotative des ailes supplémentaires.

Le principe de soulever le bateau en engendrant une portance aérodynamique et non pas une portance hydrodynamique, permet de disposer la ou les ailes sur le bateau à un endroit où l'aile et les organes pour la maintenir et contrôler peuvent être logés de façon à ne pas augmenter l'encombrement du bateau, le cas échéant en prévoyant une ou des ailes escamotables.

La portance de l'aile est optimisée en permanence moyennant un système de contrôle qui mesure les mouvements du bateau, notamment le tangage de celui-ci, et agit sur l'inclinaison de l'aile, c'est-à-dire sur l'angle d'incidence de celle-ci, de façon que la portance de l'aile soit toujours la plus grande possible sauf à des moments où la portance doit être réduite pour éviter un décollage ou un renversement du bateau, par exemple par une vague.

La variation de l'angle d'incidence par rapport à la coque permet de maintenir l'allure portante choisie constante et ainsi d'être affranchie des variations dues au tangage, et d'améliorer par ce fait le confort général de la coque en plus du soulagement d'effort de frottement dû au contact de la coque avec l'eau.

Selon différents modes de réalisation possibles de l'invention, cette dernière concerne également l'une au moins des caractéristiques ci-après, considérées isolément ou selon toute combinaison techniquement possible :
- l'aile est disposée sur le pont du bateau ;
- l'aile est montée pivotant sur des bras fixes moyennant des articulations disposées à environ un tiers de la distance du bord d'attaque de l'aile ;
- le système comprend des organes de contrôle agissant sur l'aile de façon à assurer en permanence une portance la plus constante possible de l'aile ;
- le système comprend des moyens de positionnement adaptés pour varier l'angle d'incidence de l'aile ;
- les moyens de positionnement adaptés pour varier l'angle d'incidence de l'aile sont disposés sous l'aile et montés sur celle-ci à environ deux tiers de la distance du bord d'attaque de l'aile ;
- le système comprend des moyens de sécurité adaptés pour limiter la portance de l'aile ou des ailes de manière à éviter que le bateau décolle par exemple en cas d'excès de cabrage soudain du bateau.

Outre les avantages indiqués plus haut, les dispositions de l'invention apportent à la présente invention aussi les avantages suivants :
- le montage pivotant dans la partie avant de l'aile réduit la hauteur de l'espace d'évolution du profil,
- l'utilisation de vérins attaquant le profil verticalement simplifie la structure et évite surtout la présence de moyens complexes et encombrants sur le bateau,
- la variabilité de la surface du profil d'aile apporte un moyen supplémentaire (par rapport à la seule variation de l'angle d'incidence) pour varier la portance du profil.

D'autres caractéristiques et avantages de la présente invention ressortiront de la description ci-après d'un mode de réalisation de l'invention. Cette description est faite en référence aux dessins annexés dont
- la figure 1 représente le principe de base de la portance d'une aile montée sur le pont d'un bateau,
- la figure 2 représente les principales fonctions d'un système de portance selon l'invention,
- la figure 3 représente les angles de tangage du bateau et d'incidence de l'aile,
- la figure 4 représente, sous la forme d'un diagramme, le rapport entre différentes allures de navigation du bateau et des angles d'incidence de l'aile,
- la figure 5 représente le déploiement du système de l'invention avec une seule paire d'ailes supplémentaires,
- la figure 6 représente le déploiement du système de l'invention avec deux paires d'ailes supplémentaires,
- la figure 7 est une vue latérale d'une variante des ailes du système selon la figure 6 en position rétractée, montrant un débord des ailes supplémentaires par rapport à l'aile de base et
- la figure 8 est une vue latérale des ailes de la variante selon la figure 7 en position déployée, montrant également le débord des ailes supplémentaires par rapport à l'aile de base.

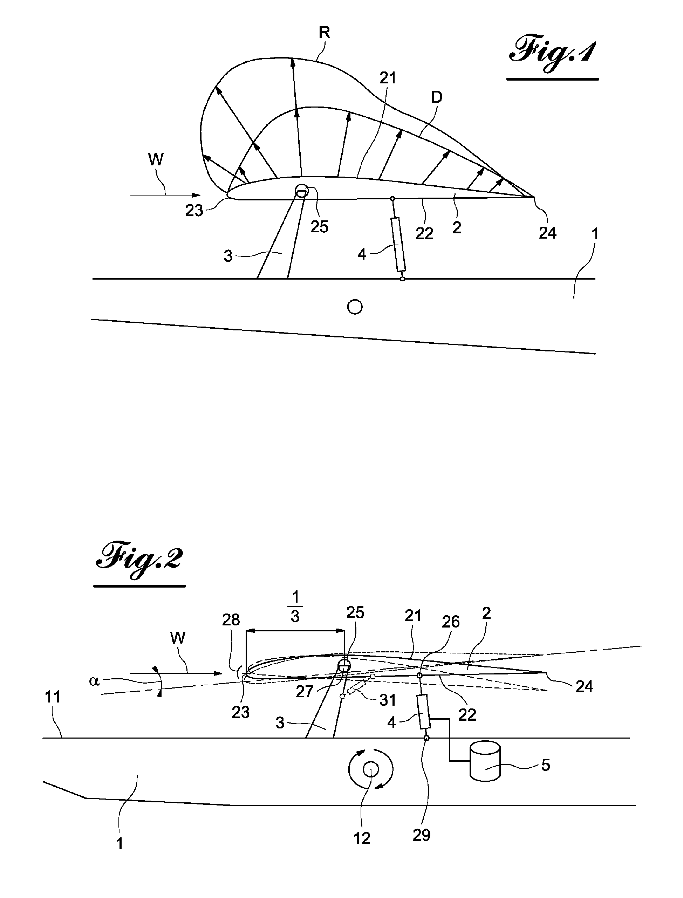

La figure 1 représente un mode de réalisation de l'invention et rappelle en même temps le principe de base de la portance d'une aile montée sur le pont d'un bateau.

De manière très schématique, le bateau est représenté par une vue latérale d'une coque 1 sur laquelle est montée une aile 2 - également appelée ci-après aile de base 2 - moyennant des bras fixes 3. L'aile 2 comporte une face supérieure 21 et une face inférieure 22 qui présentent des cambrures différentes et qui s'étendent entre un bord avant ou bord d'attaque arrondi 23 exposé à l'air arrivant sur l'aile, et un bord arrière fin ou bord de fuite 24 par lequel l'air « quitte » l'aile. La flèche W indique la direction de l'écoulement de l'air. La distance entre le bord d'attaque 23 et le bord arrière 24 est appelée la corde de l'aile et correspond à la largeur du profil de l'aile 2, appelée ci-après la largeur de l'aile 2. Les deux bras fixes 3 sont disposés proche du centre d'équilibre du bateau, c'est-à-dire de son centre de gravité, en allure planante de croisière.

La face supérieure 21 de l'aile 2 ayant une cambrure plus forte que la face inférieure 22, tout écoulement d'air sur l'aile 2 engendre une dépression D au-dessus de l'aile qui fait soulever l'aile et, avec elle, le bateau sur lequel l'aile est montée. La dépression étant fonction de la vitesse relative de l'air par rapport à l'aile 2, la dépression augmente avec la vitesse du bateau. La dépression combinée avec la surface de l'aile sur laquelle la dépression agit, donne la portance R de l'aile, c'est-à-dire la force qui soulève l'aile et donc le bateau.

Les effets obtenus selon ce principe de base de la portance d'une aile sont soumis à des influences principalement dues à l'inclinaison de l'aile par rapport à la direction de l'écoulement d'air. En effet, pour chaque aile est déterminé un diagramme de portance, également appelé la polaire de portance, par exemple celle représentée sur la figure 1, qui indique la composante verticale Rₓ de la portance R en fonction de l'inclinaison de l'aile par rapport à la direction du vent incident, le vent incident étant considéré comme arrivant horizontalement. Il s'ensuit que, inversement, on peut faire varier la portance d'une aile en variant son inclinaison. Et c'est cela ce qui est exploité par la présente invention.

Etant donné qu'un bateau, lorsqu'il se déplace, est soumis à un basculement d'avant en arrière par les vagues, également appelé le tangage du bateau, il faut varier l'inclinaison de l'aile 2 à l'aide de moyens 4 en fonction du tangage du bateau pour obtenir en permanence, selon le cas, une portance optimale ou une portance maximale de l'aile.

La figure 2 représente l'agencement des éléments décrits ci-avant sur le pont d'un bateau, le pont étant représenté par le bord supérieur 11 de la coque 1. L'aile 2 est montée sur la coque 1 moyennant les bras fixes 3 et les organes 4 à longueur variable et adaptés pour faire varier l'inclinaison de l'aile 2 par rapport à la coque 1. Selon le mode de réalisation représenté, l'aile 2 est fixée sur les bras fixes 3 par des articulations 25 qui déterminent un axe de pivotement 27 de l'aile 2. L'axe de pivotement 27 est orienté transversalement par rapport à la direction d'avancement du bateau et est située à environ un tiers de la distance du bord d'attaque 23 de l'aile 2, soit au premier tiers avant de la largeur totale de l'aile 2. L'aile 2 est pourvue au bord d'attaque 23 d'un ensemble de becs 28 de type Fowler ou autre pour augmenter la portance de l'aile 2 aux faibles vitesses.

L'aile 2 est par ailleurs fixée sur les organes 4 adaptés pour faire varier l'inclinaison de l'aile 2, par des articulations 26. Les organes 4 comprennent avantageusement des bras-pistons ou vérins hydrauliques ou mécaniques fixés d'une part au profil de l'aile 2 à environ deux tiers de la distance du bord d'attaque 23 de l'aile 2, soit au deuxième tiers avant de la largeur totale de l'aile 2, et d'autre part sur le pont du bateau moyennant des articulations 29.

Selon une variante de réalisation représentée en pointillées sur la figure 2, les vérins 4 peuvent être remplacés par, ou complétés avec, des vérins 31 montés de manière articulée sur les bras fixes 3 et, plus proche de l'axe 27 que les vérins 4, sur l'aile 2.

Selon une autre variante, le montage de l'aile 2 sur les bras fixes 3 peut être effectué moyennant des axes motorisés permettant d'appliquer la force de pivotement directement à la structure de l'aile 2. Dans ce cas, il n'y a pas de vérins 4.

La figure 2 représente l'aile 2 en traits pleins en une position dite de calage à partir de laquelle l'aile est fait pivoter entre une position d'inclinaison maximale et une position d'inclinaison minimale. Ces deux positions extrêmes sont dessinées en traits interrompus. La distance de débattement des vérins 4 est fonction de la largeur de l'aile, de sa hauteur de fixation sur le pont, des points de fixation des vérins 4 sur l'aile 2 par rapport à la corde de l'aile et de la correction angulaire maximale à apporter en positif et en négatif.

L'inclinaison de l'aile 2 est exprimée par un angle d'incidence α mesurée par rapport à une direction représentative de l'écoulement de l'air incident. L'angle d'incidence α est l'angle entre la corde de l'aile et cette direction de l'écoulement de l'air qui est considérée comme étant horizontale. Pour la plupart des profils d'aile prévus pour la mise en oeuvre de la présente invention, l'inclinaison de l'aile 2 par rapport à l'horizontale variera entre +4° et +18°. Toutefois, cet angle peut varier de quelques degrés en plus ou en moins autour de ces valeurs selon le profil d'aile retenu et selon le profil de la coque 1.

Lorsque le bateau se déplace, il est exposé à des efforts qui le font balancer d'avant en arrière autour d'un axe de tangage 12 de la coque 1 orienté transversalement à la direction d'avancement du bateau. L'axe de pivotement 27 de l'aile 2 est donc disposé sensiblement parallèlement à l'axe de tangage 12 de la coque 1 du bateau. L'angle de tangage β est mesuré entre un plan de référence de la coque 1, représenté ici par le bord supérieur 11 de la coque, et l'horizontale.

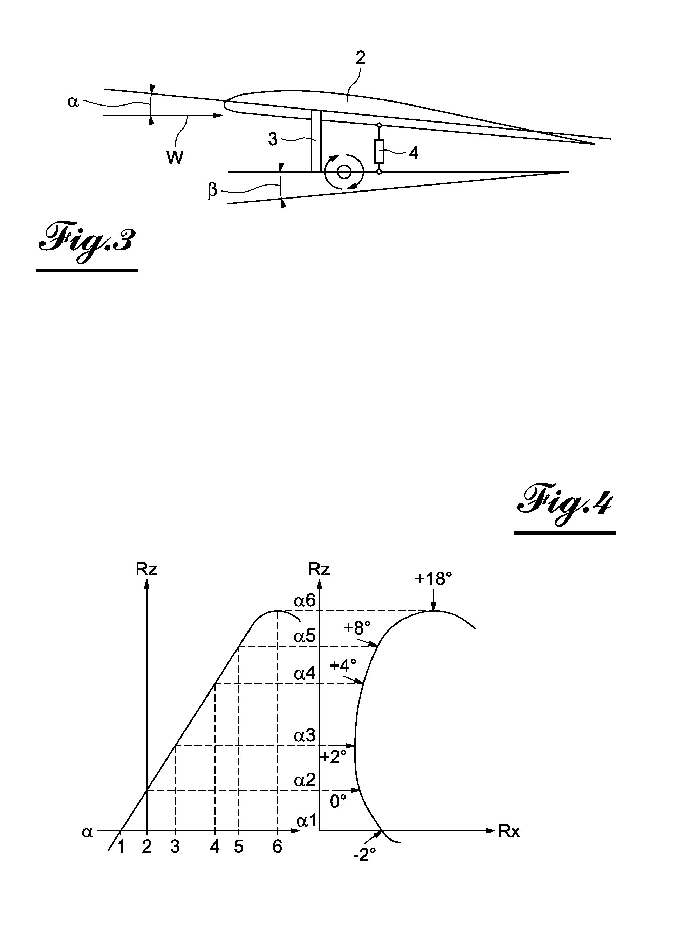

L'angle d'incidence α de l'aile 2 et l'angle de tangage β de la coque 1 sont représentés sur la figure 3.

Lorsque le bateau se déplace, l'angle de tangage β est mesuré continuellement par un système électronique 5, notamment gyroscopique, ou un inclinomètre qui, sur la base de ces mesures, engendre des signaux de commande et les envoie instantanément aux organes 4 pour varier l'angle d'incidence α de l'aile 2 de façon à maintenir à une valeur maximale ou optimale la portance de l'aile 2.

La figure 4 représente - sous la forme d'un diagramme double - la composante verticale Rz de la portance d'une aile et des allures de navigation en fonction de l'angle d'incidence α. Sur ce diagramme double, le graphe de gauche montre le développement de la composante Rz de la portance en fonction de l'augmentation de l'angle d'incidence α à partir d'une première valeur à laquelle cette composante est zéro jusqu'à une sixième valeur à laquelle cette composante est maximale. On remarque que la composante verticale de la portance diminue au-delà de la sixième valeur de l'angle d'incidence α.

Le graphe de droite du diagramme double représente à nouveau la composante verticale Rz de la portance de l'aile mais cette fois-ci ensemble avec la composante horizontale Rx de la trainée de l'aile qui résulte des turbulences apparaissant à l'aval de l'aile. Les deux composantes de la portance et de la trainée sont représentées en fonction de l'angle d'incidence α tiré du graphe de gauche. Ainsi, pour l'exemple représenté, la composante verticale de la portance est zéro lorsque l'angle d'incidence α est négatif (-2°) et elle atteint un maximum lorsque l'angle d'incidence α atteint +18°.

En ce qui concerne les allures de navigation que le bateau peut avoir entre ces deux valeurs extrêmes de l'angle d'incidence α, elles dépendent du rapport entre la composante verticale de la portance et la composante horizontale de la trainée.

Selon l'exemple représenté, une vitesse maximale absolue du bateau est possible avec un angle d'incidence α₃ de +2°, une vitesse maximale optimale est possible avec un angle d'incidence α₄ de +4° et une allure de croisière optimale est possible avec un angle d'incidence α₅ de +8°. Lorsque l'angle d'incidence α est de +18° (α₆), la composante Rz de la portance est maximale, le bateau peut atteindre la vitesse minimale à laquelle l'effet de déjaugeage se produit, c'est-à-dire le moment où le bateau a tendance à sortir de l'eau pour venir hydroplaner à la surface de l'eau.

Comme déjà indiqué plus haut, la portance de l'aile 2 n'est pas seulement fonction de l'angle d'incidence α mais aussi de la surface de l'aile. Il est donc souhaitable de choisir la surface de l'aile 2 la plus grande possible.

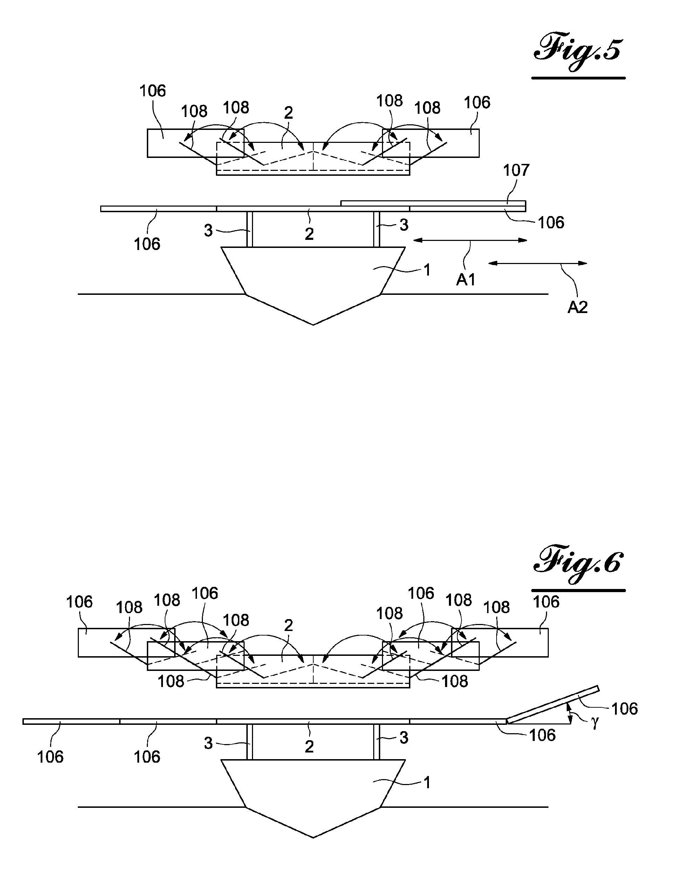

Pour obtenir une aile ayant à la fois une très grande surface lorsque le bateau se déplace hors de ports et un faible encombrement lorsque le bateau se déplace ou est amarré dans un port, l'invention propose l'utilisation d'une aile à surface variable. La variation de la surface de l'aile est obtenue par un déploiement d'ailes supplémentaires 106 montées mobiles par rapport à l'aile de base 2. La figure 5 en représente un mode de réalisation avec une paire d'ailes supplémentaires 106 et la figure 6 en représente une variante avec deux paires d'ailes supplémentaires 106, les ailes supplémentaires 106 étant montées dans les deux cas sur l'aile de base 2 comme décrit ci-après.

Les ailes supplémentaires 106 ont sensiblement le même profil que l'aile 2 et peuvent ainsi être superposées, en état rétracté des ailes supplémentaires, à l'aile 2. Lors d'un déploiement des ailes supplémentaires, ces dernières peuvent être déplacées entre la position rétractée et une position déployée par translation linéaire, notamment par coulissement. A cet effet, les ailes 106 et l'aile 2 peuvent être pourvues de rainures appropriées par lesquelles les ailes 106 sont emboîtées dans l'aile 2. Le déplacement des ailes 106 dans un sens comme dans l'autre peut alors être effectué moyennant un système de câbles ou de chaînes entraînés par des moteurs électriques ou hydrauliques commandés par le système électronique 5 commandant également l'inclinaison des ailes 2 et 106. Cependant, la présence de rainures sur les surfaces supérieures et inférieures des ailes 2 et 106 a une influence négative sur les caractéristiques aérodynamiques de ces ailes.

Pour cette raison, la présente invention propose un système de portance où les ailes supplémentaires 106 sont reliées à l'aile 2 par des bras de leviers 108 articulés respectivement sur l'aile 2 et sur les ailes 106.

Selon l'exemple de réalisation représenté sur la figure 5 avec une paire d'ailes supplémentaires 106 et la variante de la figure 6 avec deux paires d'ailes supplémentaires 106, les ailes supplémentaires sont disposées par paires, chaque paire d'ailes supplémentaires occupant un niveau différent par rapport à l'aile de base 2 et chaque paire d'ailes supplémentaires étant articulée sur la paire d'ailes située directement en dessous.

Ainsi, le déploiement et le retrait des ailes 106 sont effectués par translation rotative des ailes 106, c'est-à-dire par un pivotement des bras leviers 108. En position déployée, les ailes 106 sont en alignement extérieur de l'aile 2 et en position rétractée, les ailes 106 sont posées, alignées entre elles, sur l'aile 2.

Les figures 5 et 6 représentent l'aile 2 et les ailes 106 deux fois : en bas avec les ailes 106 entièrement déployées et au-dessus avec les ailes 106 en cours de déploiement ou de retrait. Sur ces deux figures, le pivotement des bras leviers 108 est représenté par des flèches à tête double.

Comme cela est représenté sur la seule figure 5, l'ensemble des ailes escamotables peut encore être complété par des ailes 107 (dont une seule est dessinée) montées coulissant sur les ailes 106. De cette manière, l'aile 2 peut être allongée de deux façons différentes, à savoir par le seul déploiement des ailes 106, ce qui est indiqué sur la figure 5 par la flèche à tête double A1, et par le déploiement combiné des ailes 106 et 107, indiqué par la flèche à tête double A2, ce qui donne un allongement supplémentaire.

La figure 6 représente, outre la présence de deux paires d'ailes supplémentaires 106 à la place d'une seule paire d'ailes 106, une variante supplémentaire du système de portance de la figure 5. Cette variante supplémentaire consiste en la possibilité d'incliner les ailes 106 extérieures d'un angle γ positif par rapport à un plan déterminé par l'aile 2 et les autres ailes 106 en position déployée, ce qui donne au bateau une plus grande stabilité.

Cette variante est particulièrement intéressante en combinaison avec une caractéristique supplémentaire de l'invention selon laquelle, dans une configuration avec deux paires d'ailes 106 comme représentée sur la figure 6 ou avec encore davantage de paires d'ailes 106, les ailes 106 extérieures peuvent être déployées avant les ailes 106 intérieures. En conséquence, il n'est pas nécessaire, pour bénéficier de l'effet stabilisateur d'ailes 106 inclinées, de systématiquement déployer toutes les ailes supplémentaires 106.

Pour chacun des exemples et variantes de réalisation décrits ci-avant, les ailes et leurs moyens de déploiement sont complétés par des moyens de verrouillage venant bloquer les ailes mobiles respectivement dans la position déployée et dans la position rétractée afin d'assurer la rigidité de l'ensemble des ailes et, dans la position déployée, la continuité du profil durant la navigation.

Les surfaces des ailes et en particulier la longueur de la corde des ailes et leur cambrure, sont adaptées à la taille, au poids et aux vitesses des bateaux. L'application de l'agencement de l'invention est particulièrement efficace par vitesse élevée, correspondant donc à une mer faiblement formée, c'est-à-dire ayant peu de vagues et causant ainsi un faible tangage.

Selon encore un autre aspect de la présente invention, le déploiement des ailes supplémentaires 106 par le système de translation rotative décrit plus haut permet d'augmenter la surface de portance par chaque paire d'ailes supplémentaires à un multiple entier, voire plus, de la surface de portance de l'aile 2 puisque, de chaque côté de la coque 1, les ailes supplémentaires 106 ne sont pas reliées entre elles, ni à l'aile de base 2, par emboîtement mais par des bras d'articulation 108. Ceci donne aux ailes supplémentaires 106 une certaine indépendance de forme et notamment de dimensions par rapport à l'aile de base 2 que l'on ne peut pas obtenir avec des systèmes télescopiques qui, eux, ne rajoutent que des surfaces inférieures.

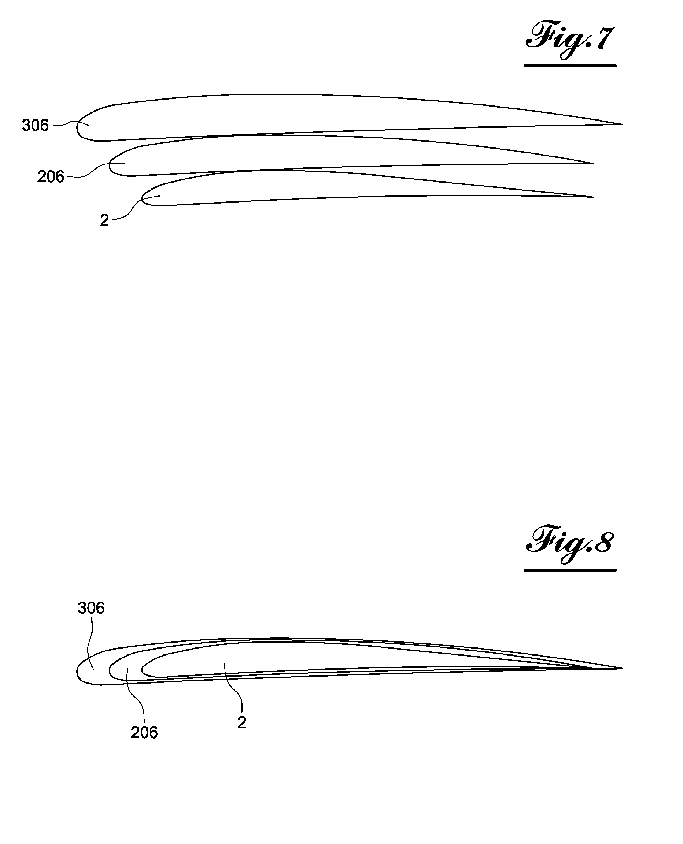

En effet, grâce à cette indépendance de forme et de dimensions, chacune des ailes de la paire (ou des paires) d'ailes supplémentaires 106 peut déborder - en position rétractée - du bord d'attaque et/ou du bord de fuite de l'aile située en dessous, comme cela est représenté sur la figure 7. Il s'en suit - comme cela est également visible sur la figure 8 qui représente ces ailes en position déployée - que cette disposition de l'invention permet de rajouter à la surface de portage initiale une surface plus importante - à nombre d'ailes supplémentaires égale - qu'il ne pourrait être possible avec, par exemple, un système télescopique. De plus, cette disposition de l'invention permet de conserver aux ailes supplémentaires, lorsqu'elles sont déployées, au moins 80% de leur capacité de sustentation par le maintien de la courbure de l'aile, principale source de la portance.

Les différences de forme et de dimensions entre les ailes supplémentaires et l'aile de base 2 sont représentées sur la figure 7 de manière très schématique pour rendre bien claire cette indépendance de forme et de dimensions. Ainsi, les ailes intérieures, qui sont référencées ici 206, débordent de l'aile 2 uniquement au bord d'attaque alors que les ailes extérieures, référencées ici 306, débordent aussi bien au bord d'attaque qu'au bord de fuite.

Grâce au montage pivotant des ailes supplémentaires respectivement sur les ailes supplémentaires du niveau en dessous ou sur l'aile de base, il est par exemple possible de déployer les ailes supplémentaires du troisième niveau sans déployer celles du deuxième niveau, ce qui donne au système de portance une plus grande flexibilité d'utilisation et de variation de la portance selon les besoins de la navigation.

## Revendications

1. Agencement d'un système de portance sur un bateau, le système comprenant au moins une aile (2) adaptée pour engendrer de la portance destinée à réduire le frottement entre une coque (1) du bateau et l'eau dans laquelle le bateau se déplace, l'aile (2) étant disposée par rapport à la coque (1) de façon à engendrer, lorsque le bateau se déplace, de la portance aérodynamique.
**caractérisé en ce que** le système comprend au moins deux ailes supplémentaires (106) et des moyens de déploiement (108) adaptés pour varier la surface de l'aile (2) par translation rotative des ailes supplémentaires (106).

2. Agencement selon la revendication 1, **caractérisé en ce que** l'aile (2) est disposée sur le pont (11) du bateau.

3. Agencement selon la revendication 1 ou 2, **caractérisé en ce que** l'aile (2) est montée pivotant sur des bras fixes (3) moyennant des articulations (25) disposées à environ un tiers de la distance du bord d'attaque (23) de l'aile (2).

4. Agencement selon l'une quelconque des revendications 1 à 3, **caractérisé en ce que** le système comprend des organes de contrôle (5) agissant sur l'aile (2) de façon à assurer en permanence une portance la plus constante possible de l'aile (2).

5. Agencement selon la revendication 4, **caractérisé en ce que** le système comprend des moyens de positionnement (4) a d aptés pour varier l'angle d'incidence (α) de l'aile (2).

6. Agencement selon la revendication 5, **caractérisé en ce que** les moyens de positionnement (4) adaptés pour varier l'angle d'incidence (α) de l'aile (2) sont disposés sous l'aile (2) et montés sur celle-ci (2) à environ deux tiers de la distance du bord d'attaque (23) de l'aile (2).

7. Agencement selon l'une quelconque des revendications 1 à 6, **caractérisé en ce que** le système comprend des moyens de sécurité adaptés pour limiter la portance de l'aile (2) ou des ailes de manière à éviter que le bateau décolle par exemple en cas d'excès de cabrage soudain du bateau.
